# FASCICULE DE BREVET EUROPEEN

(11) **EP 2 825 412 B1**
(45) Date de publication et mention de la délivrance du brevet: **02.10.2019**
(21) Numéro de dépôt: 13709436.3
(22) Date de dépôt: 14.03.2013
(51) Int. Cl.: B60L 13/03, E01B 25/30

(54) **VOIE FERRÉE, VÉHICULE FERROVIAIRE POUR CIRCULER SUR LA VOIE FERRÉE ET ENSEMBLE COMPRENANT LA VOIE FERRÉE ET LE VÉHICULE FERROVIAIRE**
SCHIENENSTRANG, SCHIENENFAHRZEUG ZUR FORTBEWEGUNG AUF DEM SCHIENENSTRANG SOWIE ANORDNUNG AUS DEM SCHIENENSTRANG UND DEM SCHIENENFAHRZEUG
RAILWAY, RAIL VEHICLE FOR TRAVELING ON THE RAILWAY, AND ASSEMBLY INCLUDING THE RAILWAY AND THE RAIL VEHICLE

(30) Priorité: 14.03.2012 FR 1252302
(43) Date de publication de la demande: 21.01.2015
(73) Titulaire: ALSTOM Transport Technologies, 93400 Saint-Ouen (FR)
(72) Inventeur: WAX-EBELING, Jurgen, 59860 Bruay-sur-l'Escaut (FR)
(74) Mandataire: Lavoix
(86) Numéro de dépôt international: PCT/EP2013/055309
(87) Numéro de publication internationale: WO 2013/135851

(56) Documents cités:
- EP-A2- 1 803 604
- WO-A1-2006/032255
- WO-A2-2008/090129
- DE-A1-102006 035 092
- FR-A1- 2 176 164
- US-A1- 2005 001 048
- US-A1- 2005 011 399
- US-A1- 2011 259 236
- ROLF HELLINGER ET AL: "Linear Motor-Powered Transportation: History, Present Status, and Future Outlook", PROCEEDINGS OF THE IEEE, IEEE. NEW YORK, US, vol. 97, no. 11, 1 novembre 2009 (2009-11-01), pages 1892-1900, XP011277911, ISSN: 0018-9219, DOI: 10.1109/JPROC.2009.2030249

## Description

La présente invention concerne le domaine des systèmes de traction des véhicules ferroviaires prévu pour circuler le long de voies ferrées, en particulier le domaine des tramways prévus pour circuler le long de voies ferrées en zone urbaine.

Les voies ferrées de tramway peuvent présenter, au moins sur des tronçons, une pente importante rendant la montée ou la descente difficile pour un tramway classique à roues métalliques, du fait de l'adhérence relativement fiable des roues métalliques sur les rails métallique de la voie ferrée.

Il est possible de prévoir des roues pneumatiques, mais ceci augmente la résistance au roulement et l'énergie nécessaire à la propulsion du véhicule ferroviaire.

US2005/0001048 divulgue une voie ferrée comprenant des rails de guidage, un rail de réaction formant la partie fixe d'un moteur linéaire à induction, et des rails d'alimentation. Le rail de réaction comprend une plaque en acier et une plaque de couverture.

DE 10 2006 035 092 A1 divulgue un ensemble comprenant une voie ferrée munie d'aimants permanents et un véhicule ferroviaire muni d'un moteur électrique linéaire synchrone propre à coopérer avec les aimants permanents pour générer un effort de traction du véhicule, par exemple dans les tronçons en pente de la voie ferrée.

Néanmoins, un tel ensemble est coûteux car il nécessite de disposer des aimants permanents le long de la voie ferrée, et n'est pas satisfaisant pour une utilisation en ville.

Un des buts de l'invention est de proposer un système de traction pour véhicule ferroviaire permettant une traction améliorée qui soit adapté pour une utilisation en ville.

A cet effet, l'invention propose une voie ferrée selon la revendication 1. Des caractéristiques optionnelles sont définies aux revendications 2 à 10.

L'invention concerne également un ensemble selon la revendication 11. Des caractéristiques optionnelles sont définies aux revendications 12 à 15.

L'invention et ses avantages seront mieux compris à la lecture de la description qui va suivre, donnée uniquement à titre d'exemple, et faite en référence aux dessins annexés, sur lesquels ;
- la Figure 1 est une vue schématique de côté d'un ensemble selon l'invention comprenant une voie ferrée et un véhicule ferroviaire circulant sur la voie ferrée ;
- les Figures 2 et 3 sont des vues de la voie ferrée respectivement en coupe dans un plan transversal et en élévation de dessus ;
- la Figures 4 est une vue en coupe dans un plan transversal de la voie ferrée et d'un bogie du véhicule ;
- la Figure 5 est une vue schématique de dessus du bogie ; et
- la Figure 6 est une vue analogue à celle de la Figure 4 illustrant un bogie selon une variante.

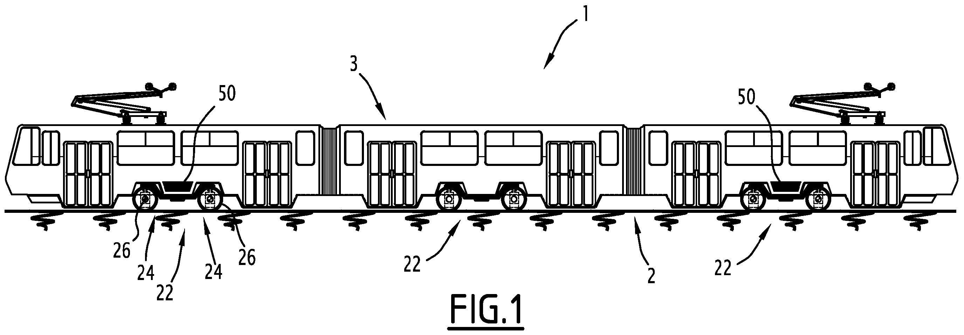

Tel qu'illustré sur la Figure 1, l'ensemble 1 comprend une voie ferrée 2 et un véhicule ferroviaire 3 circulant sur la voie ferrée 2.

La voie ferrée 2 et le véhicule ferroviaire 3 comprennent un moteur linéaire à induction ou moteur linéaire asynchrone pour l'entraînement du véhicule ferroviaire 3 par rapport la voie ferrée 2. Le moteur linéaire à induction comprend une partie fixe intégrée à la voie ferrée 2 et une partie mobile portée par le véhicule ferroviaire 3.

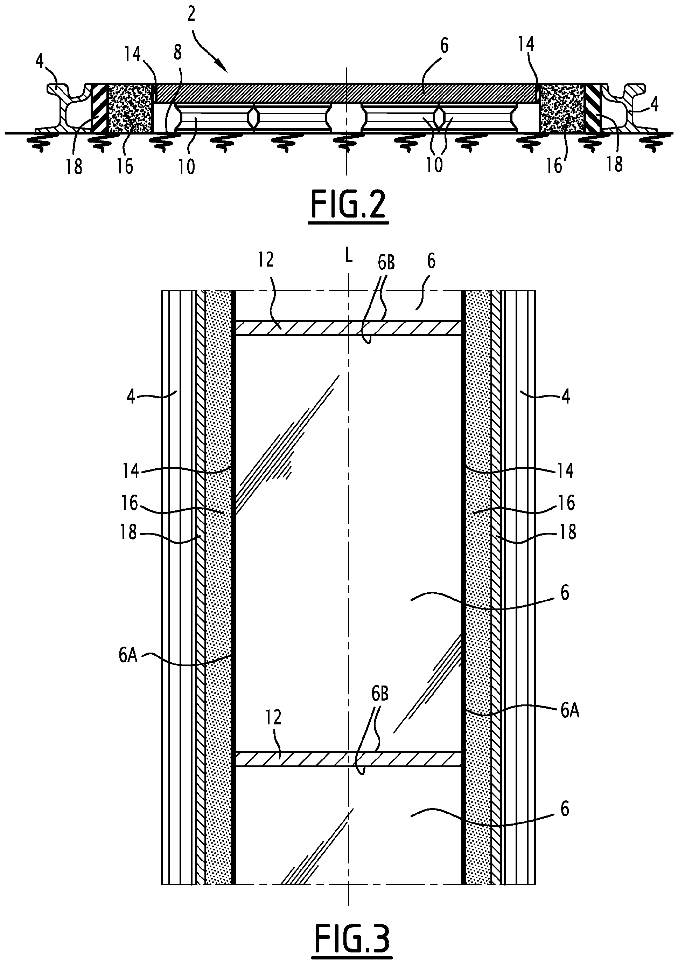

Telle que représentée sur les Figures 2 et 3, la voie ferrée 2 comprend deux files de rails 4 parallèles s'étendant suivant une ligne médiane longitudinale L et espacées transversalement, et une file de plaques 6 s'étendant suivant la ligne médiane longitudinale L. La file de plaques 6 forme la partie fixe du moteur linéaire à induction.

Dans la suite de la description, les termes « horizontal », « vertical », « longitudinal », « transversal », « haut » et « bas » s'entendent par rapport à la voie ferrée et sa ligne longitudinale.

Les files de rails 4 et la file de plaque 6 sont disposés sur une surface de support 8.

Chaque file de rails 4 comprend une suite de rails placés bout à bout en étant liés les un aux autres à leurs extrémités adjacentes, par exemple par soudage ou par l'intermédiaire d'éclisses.

La file de plaques 6 comprend une suite de plaques 6 placées bout à bout à plat entre les files de rails 4. Chaque plaque 6 s'étend sensiblement horizontalement et transversalement entre les files de rails 4.

Chaque plaque 6 est rectangulaire et comprend deux bords longitudinaux 6A parallèles aux rails 4 opposés et deux bords transversaux 6B s'étendant transversalement par rapport aux rails 4. Les plaques 6 sont pleines. Chaque plaque est mince, son épaisseur étant faible en regard de sa longueur et de sa largeur.

Les plaques sont conductrices d'électricité, et magnétiques à aimantation non permanente ou amagnétique. Selon l'invention, les plaques sont amagnétiques.

Une plaque magnétique à aimantation non permanente possède une susceptibilité magnétique. Elle est magnétisable de manière réversible. Elle peut s'aimanter temporairement en présence d'un champ magnétique extérieur - ou excitation magnétique - et se désaimanter lorsque le champ magnétique extérieur disparaît.

Une plaque amagnétique possède une susceptibilité magnétique nulle et ne s'aimante pas en présence d'un champ magnétique extérieur.

Les plaques sont avantageusement pleines et réalisées dans un matériau conducteur d'électricité magnétique à aimantation non permanente ou amagnétique.

Les plaques sont avantageusement réalisées en aluminium, qui est un matériau amagnétique.

Chaque plaque 6 est isolée électriquement. Chaque plaque 6 est ainsi dépourvue de liaison électrique avec un autre élément conducteur.

La voie ferrée 2 comprend au moins un élément de support 10, isolant électriquement, supportant chaque plaque 6. Chaque élément de support 10 est interposé entre la plaque 6 correspondante et la surface de support 8. Chaque plaque 6 est ainsi isolée électriquement de la surface de support 8.

Chaque élément de support 10 maintient la plaque 6 correspondante verticalement, longitudinalement et transversalement. La voie ferrée 2 comprend ici une pluralité d'éléments de support 10 supportant chaque plaque 6. Chaque élément de support 10 est par exemple formé d'un bloc élastomère.

Chaque plaque 6 est isolée électriquement de chaque plaque 6 adjacente par un joint transversal 12 isolant électriquement. Chaque joint transversal 12 est interposé entre les bords transversaux 6B adjacents des plaques 6 d'une paire de plaques 6 adjacentes.

Cette isolation électrique évite le passage de courants vagabonds et nocifs au rendement et à la sécurité des piétons à l'extérieur des limites du véhicule.

Chaque plaque 6 est isolée électriquement par des joints longitudinaux 14 qui sont isolants électriquement et qui s'étendent le long des bords longitudinaux 6A des plaques 6.

La voie ferrée 2 comprend des entretoises 16, réalisées par exemple en béton, s'étendant longitudinalement le long des files de rails 6, entre les rails 6. Les entretoises 16 permettent de maintenir l'écartement entre les files de rails 4.

La voie ferrée 2 comprend, entre chaque file de rails 6 et l'entretoise 16 adjacente, un élément longitudinal de jointure 18 en élastomère.

Les entretoises 16 sont interposées entre les plaques 6 et chaque file de rails 4. Chaque entretoise 16 est interposée entre une file de rails 4 et la file de plaques 6. Chaque plaque 6 est disposée transversalement entre les entretoises 16 qui assurent ainsi un maintien transversal des plaques 6.

Chaque joint longitudinal 14 est interposé entre les plaques 6 et une entretoise 16 et isole électriquement les plaques 6 des entretoises 16.

En revenant à la Figure 1, le véhicule ferroviaire 3 comprend des bogies 22 possédant au moins un essieu 24, chaque essieu 24 comprenant deux roues 26 coaxiales. Chaque bogie 22 comprend ici deux essieux 24, et peut comprendre en variante un seul essieu (bogie mono-essieu).

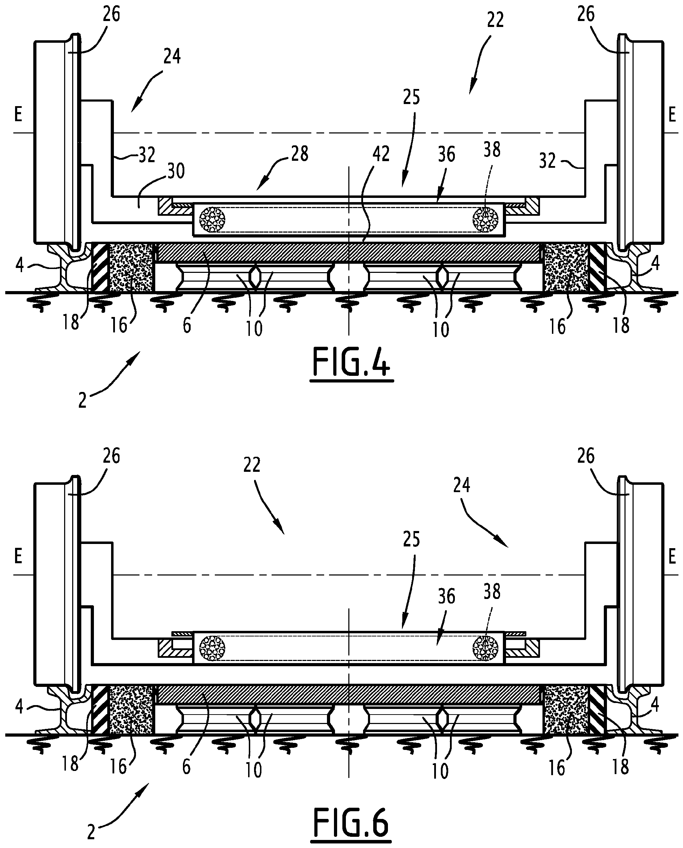

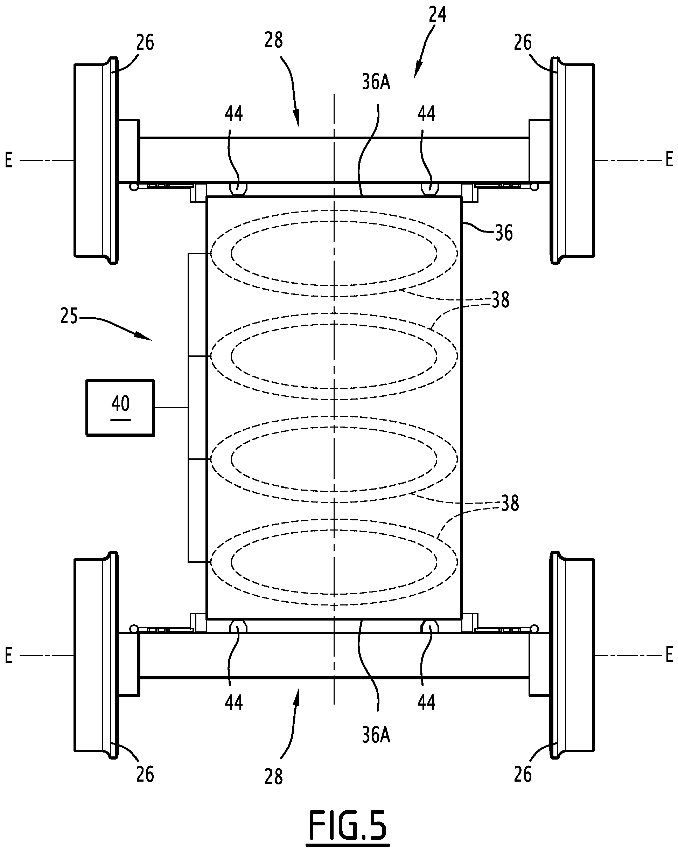

Les Figures 4 et 5 illustrent un bogie 22 du véhicule ferroviaire 3 possédant des moyens formant une partie mobile 25 de moteur linéaire à induction, qui sont propres à coopérer avec les plaques 6 de la voie ferrée 2 pour générer un effort longitudinal pour l'entraînement du véhicule ferroviaire 3.

Le bogie 22 possède deux essieux 24 (Figure 6). Chaque essieu 24 a un axe d'essieu E-E et comprend deux roues 26 coaxiales montées rotatives autour de l'axe d'essieu E-E aux extrémités d'une traverse 28.

La traverse 28 est une partie non suspendue du bogie. De manière connue en soi, le bogie 22 comprend un châssis suspendu sur la traverse 28 par l'intermédiaire d'une suspension primaire, et une suspension secondaire disposée sur le châssis pour suspendre une caisse de véhicule sur le châssis.

La traverse 28 est du type en forme de portique et comprend une poutre transversale 30 décalée vers le bas par rapport à l'axe d'essieu E-E et deux parties d'extrémité 32 s'étendant vers le haut à partir des extrémités de la poutre transversale 30, chaque partie d'extrémité 32 supportant une roue 26 à rotation autour de l'axe d'essieu E-E. Ce type de traverse permet d'abaisser le plancher du véhicule ferroviaire.

Le bogie 22 comprend un porte-inducteur 36 en forme de plaque portant des inducteurs 38. Les inducteurs 38 sont propres à générer un champ magnétique lorsqu'ils sont alimentés en électricité. Les inducteurs 38 sont par exemple prévus sous la forme de bobines électriques.

Le bogie 22 comprend une unité d'alimentation électrique 40 pour alimenter les inducteurs 38 en énergie électrique.

Le porte-inducteur 36 est monté sur les traverses 28 de manière à s'étendre parallèlement aux plaques 6, sensiblement horizontalement et transversalement, en étant espacée des plaques 6 par un entrefer 42.

Le porte-inducteur 36 est ainsi supporté sur une partie non suspendue du bogie 22, ce qui permet d'assurer un entrefer constant 42, à l'usure près des roues 26.

Le porte-inducteur 36 est disposé longitudinalement entre les deux essieux 24 du bogie. Des butées d'amortissement de chocs 44, pax exemple des butées en élastomère, sont interposées entre les extrémités longitudinales 36A du porte-inducteur 36 et les traverses 28.

Le porte inducteur 36, les inducteurs 38 et l'unité d'alimentation électrique forment la partie mobile 25 de moteur linéaire à induction.

En fonctionnement, l'unité d'alimentation électrique 40 alimente les inducteurs 38 de façon à générer un champ magnétique inducteur variable. Ce champ magnétique variable génère des courants induits (ou courants de Foucault) dans chaque plaque 6 en regard du porte-inducteur 36 soumise au champ magnétique inducteur. Chaque plaque 6 étant isolée électriquement, les courants induits circulent en boucle dans la plaque 6 et génèrent un champ magnétique induit qui s'oppose au champ magnétique inducteur, ce qui permet de générer en réaction un effort longitudinal.

Dans le cas de plaques amagnétiques, le champ magnétique induit généré par les courant de Foucault apparaît temporairement en présence des inducteurs 38 actifs et disparaît ensuite.

Dans le cas de plaques magnétiques à aimantation non permanente, un champ magnétique induit résultant du champ magnétique généré par les courants de Foucault et un champ magnétique d'aimantation apparaissent temporairement en présence des inducteurs 38 actifs et disparaissent ensuite.

Ainsi le champ magnétique induit dans les plaques 6 apparaît uniquement en présence des inducteurs 38 actifs et disparaît en l'absence des inducteurs 38. Ainsi, les plaques 6 ne génèrent pas de champ magnétique en l'absence du véhicule ce qui permet leur utilisation en ville sans risque de perturbations pour les piétons et les équipements électroniques, par exemple les stimulateurs cardiaques (ou « pacemakers » en anglais). Selon l'invention, les plaques 6 sont amagnétiques pour limiter tout risque de perturbation.

Les courants induits dans les plaques 6 pourraient représenter un danger pour des personnes à proximité.

Ainsi, de préférence, la longueur des plaques 6 est prévue pour que les plaques 6 susceptibles de conduire des courants induits, lorsque le ou chaque moteur électrique linéaire asynchrone est actif, sont recouvertes par le véhicule ferroviaire 3.

Dans mode de réalisation, la longueur cumulée de deux plaques 6 consécutives de la file de plaques 6 est inférieure à la longueur du véhicule ferroviaire 3.

En option, comme illustré sur la Figure 6, le porte-inducteur 36 est monté mobile verticalement par rapport aux traverses 28 entre une position basse active (Figure 4) et une position haute de repos (Figure 6). La position haute de repos permet de conserver un écartement vertical plus grand lorsque la partie mobile 25 de moteur linéaire à induction n'est pas active.

De préférence, le véhicule ferroviaire 3 comprend au moins un moteur d'entraînement de roues 50 pour l'entraînement en rotation de roues 26 motrices, ici deux. Chaque moteur d'entrainement de roues 50 est couplé mécaniquement à chaque roue entrainée par ce moteur. Le ou chaque moteur d'entraînement de roues 50 est utilisé principalement pour entraîner le véhicule ferroviaire 3, et le moteur linéaire à induction est utilisé auxiliairement, par exemple pour le passage de tronçons en pente de la voie ferrée 2.

Dans ce cas, il est possible de prévoir des premiers tronçons de voie ferrée dépourvus de plaques, et des deuxièmes tronçons pourvus de plaques pour coopérer avec les inducteurs du véhicule ferroviaire. De préférence, les deuxièmes tronçons sont des tronçons en pente, présentant une pente supérieure à celle des premiers tronçons.

Grâce à l'invention, il est possible d'assurer l'entraînement d'un véhicule ferroviaire dans une voie ferrée avec une pente prononcée, sans risque pour les piétons en ville.

Dans des tronçons de faible pente, le véhicule ferroviaire est entraîné par entraînement en rotation des roues d'essieux et friction des roues sur les rails, et, dans des tronçons de pente plus forte, le moteur électrique linéaire asynchrone coopère avec les plaques de la voie ferrée pour générer un effort d'entraînement supplémentaire, sans risque pour les piétons autour de la voie ferrée.

En l'absence de véhicule ferroviaire, les plaques ne génèrent pas de champ magnétique potentiellement perturbateur pour les piétons.

L'invention s'applique en particulier aux voies ferrées de tramway, et de manière plus générale à tout type de voie ferrée, urbaine ou extra-urbaine.

## Revendications

1. Voie ferrée de tramway, comprenant deux files de rails (4) parallèles s'étendant suivant une ligne médiane longitudinale (L) en étant espacées transversalement, **caractérisée en ce qu'**elle comprend en outre, sur au moins un tronçon longitudinal, une file de plaques (6) s'étendant suivant la ligne médiane longitudinale (L) et formant une partie fixe d'un moteur linéaire asynchrone à induction, chaque plaque (6) étant conductrice d'électricité et amagnétique, chaque plaque (6) étant isolée électriquement.

2. Voie ferrée selon la revendication 1, dans laquelle la file de plaques (6) est disposée entre les files de rails (4).

3. Voie ferrée selon la revendication 1 ou 2, dans laquelle les plaques (6) sont isolées électriquement par un joint longitudinal (14) le long de chaque bord longitudinal (6A) des plaques (6).

4. Voie ferrée selon l'une quelconque des revendications précédentes, comprenant des entretoises (16) s'étendant longitudinalement le long des files de rails (6), entre les rails (6), chaque entretoise (16) étant interposée entre une file de rails (4) et la file de plaques (6), chaque plaque (6) étant disposée transversalement entre les entretoises (16).

5. Voie ferrée selon les revendications 3 et 4, dans laquelle chaque joint longitudinal (14) est interposé entre les plaques (6) et une entretoise (16) et isole électriquement les plaques (6) des entretoises (16).

6. Voie ferrée selon la revendication 4 ou 5, dans laquelle les entretoises (16) sont réalisées en béton.

7. Voie ferrée selon l'une quelconque des revendications précédentes, dans laquelle chaque plaque (6) est isolée électriquement de chaque plaque (6) adjacente par un joint transversal (12).

8. Voie ferrée selon l'une quelconque des revendications précédentes, dans laquelle chaque plaque (6) est isolée électriquement d'une structure de support (8) de la voie ferrée (2) par au moins un élément de support (10) isolant électriquement interposé entre la plaque et la structure de support (8)

9. Voie ferrée selon l'une quelconque des revendications précédentes, dans laquelle les plaques (6) sont en aluminium.

10. Voie ferrée selon l'une quelconque des revendications précédentes, s'étendant en ville.

11. Ensemble comprenant une voie ferrée selon l'une quelconque des revendications précédentes et un véhicule ferroviaire prévu pour circuler le long de la voie ferrée, le véhicule ferroviaire comprenant au moins un inducteur (38) formant une partie mobile d'un moteur linéaire asynchrone à induction, le ou chaque inducteur (38) étant configuré pour générer un champ magnétique propre à induire des courants induits dans des plaques (6) de la voie ferrée (2) en regard, pour générer en réaction un effort longitudinal.

12. Ensemble selon la revendication 11, dans lequel le ou chaque inducteur (38) est monté sur une partie non suspendue d'un bogie (22) du véhicule.

13. Ensemble selon la revendication 11 ou 12, dans lequel le ou chaque inducteur (38) est monté par l'intermédiaire d'un système de réglage de hauteur permettant de faire varier la hauteur du ou de chaque inducteur (38) par rapport à la voie ferrée.

14. Ensemble selon l'une quelconque des revendications 11 à 13, dans lequel le ou chaque inducteur (38) est porté par un porte-inducteur (36) mobile verticalement entre une position basse active et une position haute de repos.

15. Ensemble selon l'une quelconque des revendications 11 à 14, comprenant en outre au moins un moteur d'entraînement de roues pour l'entraînement en rotation des roues d'au moins un essieu d'un bogie du véhicule.

## Patentansprüche

1. Schienenweg für Trambahn, aufweisend zwei parallele Schienenstränge (4), die sich entlang einer Längsmittellinie (L) erstrecken, wobei sie im Querabstand sind, **dadurch gekennzeichnet, dass** sie ferner aufweist, in wenigstens einem Längsabschnitt, einen Strang Platten (6), der sich entlang der Längsmittellinie (L) erstreckt und einen feststehenden Teil eines Induktions-Asynchron-Linearmotors bildet, wobei jede Platte (6) elektrisch leitfähig und unmagnetisch ist, wobei jede Platte (6) elektrisch isoliert ist.

2. Schienenweg gemäß Anspruch 1, wobei der Strang Platten (6) zwischen den Schienensträngen (4) angeordnet ist.

3. Schienenweg gemäß Anspruch 1 oder 2, wobei die Platten (6) elektrisch isoliert sind mittels einer Längsfuge (14) entlang jedes Längsrands (6A) der Platten (6).

4. Schienenweg gemäß irgendeinem der vorhergehenden Ansprüche, aufweisend Distanzteile (16), die sich längs entlang der Schienenstränge (6) zwischen den Schienen (6) erstrecken, wobei jedes Distanzteil (16) zwischen einem Schienenstrang (4) und dem Strang Platten (6) angeordnet ist, und wobei jede Platte (6) quer zwischen den Distanzteilen (16) angeordnet ist.

5. Schienenweg gemäß Ansprüchen 3 und 4, wobei jede Längsfuge (14) zwischen den Platten (6) und einem Distanzteil (16) angeordnet ist und die Platten (6) von den Distanzteilen (16) elektrisch isoliert.

6. Schienenweg gemäß Anspruch 4 oder 5, wobei die Distanzteile (16) aus Beton realisiert sind.

7. Schienenweg gemäß irgendeinem der vorhergehenden Ansprüche, wobei jede Platte (6) von jeder benachbarten Platte (6) mittels einer Querfuge (12) elektrisch isoliert ist.

8. Schienenweg gemäß irgendeinem der vorhergehenden Ansprüche, wobei jede Platte (6) von einer Tragstruktur (8) des Schienenwegs (2) elektrisch isoliert ist mittels wenigstens eines elektrisch isolierenden Tragelements (10), das zwischen der Platte und der Tragstruktur (8) angeordnet ist.

9. Schienenweg gemäß irgendeinem der vorhergehenden Ansprüche, wobei die Platten (6) aus Aluminium sind.

10. Schienenweg gemäß irgendeinem der vorhergehenden Ansprüche, der sich in der Stadt erstreckt.

11. Einrichtung mit einem Schienenweg gemäß irgendeinem der vorhergehenden Ansprüche und einem Schienenfahrzeug, das dazu vorgesehen ist, um entlang des Schienenwegs zu fahren, wobei das Schienenfahrzeug aufweist wenigstens Induktor (38), der einen mobilen Teil eines Induktions-Asynchron-Linearmotors bildet, wobei der oder jeder Induktor (38) dazu konfiguriert ist, um ein Magnetfeld zu erzeugen, das imstande ist, Induktionsströme in gegenüberliegenden Platten (6) des Schienenwegs (2) zu induzieren, um als Reaktion eine Längskraft zu erzeugen.

12. Einrichtung gemäß Anspruch 11, wobei der oder jeder Induktor (38) an einem nicht-gefederten Abschnitt eines Drehgestells (22) des Fahrzeugs montiert ist.

13. Einrichtung gemäß Anspruch 11 oder 12, wobei der oder jeder Induktor (38) über ein Höheneinstell-System montiert ist, welches es ermöglicht, die Höhe des oder jedes Induktors (38) bezüglich des Schienenwegs einzustellen.

14. Einrichtung gemäß irgendeinem der Ansprüche 11 bis 13, wobei der oder jeder Induktor (38) von einem Induktor-Träger (36) getragen ist, der vertikal bewegbar ist zwischen einer unteren Aktiv-Position und einer oberen Ruhe-Position.

15. Einrichtung gemäß irgendeinem der Ansprüche 11 bis 14, ferner aufweisend wenigstens einen Räder-Antriebsmotor zum Drehantreiben von Rädern wenigstens einer Achse eines Drehgestells des Fahrzeugs.

## Claims

1. Tramway track, comprising two lines of parallel rails (4) extending along a longitudinal centre line (L) while being spaced apart transversely, **characterised in that** it further comprises, on at least one longitudinal portion, a line of plates (6) extending along the longitudinal centre line (L) and forming a fixed part of an asynchronous linear induction motor, each plate (6) being electrically conductive and non-magnetic, each plate (6) being electrically isolated.

2. Track according to claim 1, wherein the line of plates (6) is arranged between the lines of rails (4).

3. Track according to claim 1 or 2, wherein the plates (6) are electrically isolated by a longitudinal joint (14) along each longitudinal edge (6A) of the plates (6).

4. Track according to any one of the preceding claims, comprising spacers (16) extending longitudinally along the lines of rails (6), between the rails (6), each spacer (16) being interposed between a line of rails (4) and the line of plates (6), each plate (6) being arranged transversely between the spacers (16).

5. Track according to claims 3 and 4, wherein each longitudinal joint (14) is interposed between the plates (6) and a spacer (16) and electrically isolates the plates (6) from the spacers (16).

6. Track according to claim 4 or 5, wherein the spacers (16) are made of concrete.

7. Track according to any one of the preceding claims, wherein each plate (6) is electrically isolated from each adjacent plate (6) by a transverse joint (12).

8. Track according to any one of the preceding claims, wherein each plate (6) is electrically isolated from a support structure (8) of the track (2) by at least one electrically isolating support element (10) interposed between the plate and the support structure (8).

9. Track according to any one of the preceding claims, wherein the plates (6) are made of aluminium.

10. Track according to any one of the preceding claims, extending into town.

11. Assembly comprising a track according to any one of the preceding claims and a railway vehicle provided to travel along the track, the railway vehicle comprising at least one inductor (38) forming a movable part of an asynchronous linear induction motor, the or each inductor (38) being configured to generate a magnetic field capable of inducing induced currents in plates (6) of the facing track (2), in order to generate in response a longitudinal force.

12. Assembly according to claim 11, wherein the or each inductor (38) is mounted on an unsuspended part of a bogie (22) of the vehicle.

13. Assembly according to claim 11 or 12, wherein the or each inductor (38) is mounted by way of a height adjusting system which allows the height of the or each inductor (38) relative to the track to be varied.

14. Assembly according to any one of claims 11 to 13, wherein the or each inductor (38) is carried by an inductor carrier (36) which is movable vertically between a bottom active position and a top rest position.

15. Assembly according to any one of claims 11 to 14, further comprising at least one wheel-driving motor for driving in rotation the wheels of at least one axle of a bogie of the vehicle.
